(19) Europäisches Patentamt / European Patent Office / Office européen des brevets

(11) **EP 1 900 775 B1**

(12) **EUROPÄISCHE PATENTSCHRIFT**

(45) Veröffentlichungstag und Bekanntmachung des Hinweises auf die Patenterteilung:
**23.06.2010 Patentblatt 2010/25**

(21) Anmeldenummer: **07017460.2**

(22) Anmeldetag: **06.09.2007**

(51) Int Cl.:
*C08L 67/02* (2006.01)          *B32B 27/36* (2006.01)
*C08J 5/18* (2006.01)

(54) **Peelbare Polyesterfolie auf Basis von titankatalysierten Polyestern**

Peelable polyester film based on titanium catalysed polyesters

Feuille de polyester pelable à base de polyester catalysé au titane

(84) Benannte Vertragsstaaten:
**DE FR GB IT LU TR**

(30) Priorität: **15.09.2006 DE 102006043335**

(43) Veröffentlichungstag der Anmeldung:
**19.03.2008 Patentblatt 2008/12**

(73) Patentinhaber: **Mitsubishi Polyester Film GmbH**
**65203 Wiesbaden (DE)**

(72) Erfinder:
• **Tano, Kazuo**
**1-21-7 Aobadai, Aoba-ku**
**227-0062 (JP)**
• **Bennett, Cynthia**
**55232 Alzey (DE)**
• **Pfeiffer, Herbert**
**55126 Mainz (DE)**
• **Konrad, Matthias**
**65719 Hofheim (DE)**
• **Hilkert, Gottfried**
**55291 Saulheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
EP-A- 0 835 899          EP-A- 1 146 068
EP-A- 1 375 572          EP-A- 1 714 998
US-A1- 2003 165 700

**Beschreibung**

Die Erfindung betrifft eine mehrschichtige, biaxial orientierte, heißsiegelbare und peelfähige Polyesterfolie auf Basis von titankatalysierten Polyestern. Die Erfindung betrifft weiterhin ein Verfahren zur Herstellung der Folie und ihre Verwendung.

Heißsiegelbare und peelfähige, biaxial orientierte Polyesterfolien sind nach dem Stand der Technik bekannt. Daneben sind auch Polyesterfolien bekannt, die unter Verwendung von titankatalysierten Polyesterrohstoffen hergestellt werden. Weiterhin sind hydrophile Beschichtungen und Folien mit diesen Beschichtungen bekannt.

In der WO 96/19333 wird ein Verfahren zur Herstellung peelfähiger Folien beschrieben, bei dem die peelfähige Schicht in-line auf die Polyesterfolie aufgebracht wird. Die peelfähige Schicht enthält einen Copolyester, aufgebaut aus einer aromatischen Dicarbonsäure, einer aliphatischen Dicarbonsäure, einer Dicarbonsäure mit einer freien Säuregruppe oder einem Salz davon, einem Glykol mit 2 bis 12 Kohlenstoffatomen und einem Polyalkyldiol zur Bildung des Copolyesters. Die Beschichtung wird aus einer wässrigen Dispersion oder einer Lösung an die Folie angetragen. Das Verfahren ist hinsichtlich der verwendbaren Polymere und der erzielbaren Schichtdicken für die peelfähige Schicht eingeschränkt. Außerdem ist die Folie hinsichtlich ihrer optischen Eigenschaften verbesserungswürdig.

Die EP-A-1 471 096, EP-A-1 471 097, EP-A-1475 228, EP-A-1 475 229, EP-A-1 471 094 und EP-A-1471 098 beschreiben heißsiegelbare und gegenüber A/CPET peelfähige Polyesterfolien mit ABC-Schichtaufbau, die zur Einstellung der gewünschten Peeleigenschaften in der peelfähigen und heißsiegelbaren Decksicht A amorphe, aromatische und aliphatische Copolyester und entweder ca. 2 bis 10 Gew.-% anorganische oder organische Partikel oder aber ein polyesterunverträgliches Polymer wie z. B. Norbornen/Ethylen enthalten. Die Folien zeichnen sich durch gute Peeleigenschaften aus, sind aber von den optischen Eigenschaften und von ihrem Migrationsverhalten her noch verbesserungswürdig.

Beschrieben sind auch Polyesterfolien, die auf Basis von titankatalysierten Polyestern hergestellt wurden. So ist beispielsweise in der EP-A-1 375 572 eine stabilisierte Folie auf Basis von titankatalysierten Polyestern beschrieben.

Aus der US-A-4,467,073 ist eine transparente Antibeschlag-Beschichtung bekannt. Die Zusammensetzung enthält a) Polyvinylpyrrolidon, Polydimethylacrylamid oder ein Polyvinylpyrrolidon-Copolymer mit einem $\alpha$-Olefin, b) ein Polyisocyanat-Präpolymer, c) ein Tensid und d) ein organisches Lösemittel. Nachteil dieser Erfindung ist das Verwenden eines organischen Lösemittels, speziell wenn der Beschichtungsschritt in die Folienherstellung einbezogen werden soll (in-line). Zudem ist der Einsatz eines Isocyanats für die Verwendung in der Lebensmittelverpackung bedenklich, da kanzerogene primäre Amine entstehen können.

Die US-A-5,262,475 beschreibt eine hydrophile Zusammensetzung, die Polyvinylpyrrolidon, Polyvinylalkohol und als Vernetzer Melamin, eine Mineralsäure oder eine starke organische Säure enthält. Weiterhin kann die Beschichtungslösung Additive wie Kettenverlängerer, Schaumregulierer oder Tenside enthalten. Der Feststoffgehalt der Beschichtung beträgt 5 bis 50 %. Die Vernetzung zu harten klaren Schichten erfordert Temperaturen von mindestens 75 °C, in den Beispielen werden Temperaturen zwischen 130 und 150 °C verwendet. Damit sind diese Beschichtungen für die In-line-Aufbringung auf Polyesterfolien ungeeignet, da die Komponenten bereits beim Trocknen bzw. beim Strecken vernetzen und die Beschichtung somit einreißt und damit zu Abrissen der Folie führen kann. Auch die Tatsache, dass die vernetzten Beschichtungen als hart beschrieben werden, lässt ihre Anwendung auf flexiblen Substraten ungeeignet erscheinen.

Die optischen Eigenschaften (Trübung und Glanz) und das Migrationsverhalten von Folien nach dem vorliegenden Stand der Technik werden maßgeblich durch die verwendeten Polymere, die verwendeten anorganischen oder organischen Partikel (= externe Partikel), aber auch durch die bei der Polyesterherstellung verwendeten Katalysatoren beeinflusst. Die durch die Katalysatoren entstehenden Präzipitate (= interne Partikel) bilden Partikel in der Größenordnung von bis zu 1 $\mu$m, die in Abhängigkeit von der Art des verwendeten Katalysators und dessen Konzentration zu einem unerwünschten Anstieg der Trübung und zu einer unerwünschten Reduzierung des Oberflächenglanzes führen.

Darüber hinaus zeigen Folien hergestellt mit Katalysatoren auf Antimonbasis eine unerwünschte Migration. Aus herkömmlichen Folien mit einer peelfähigen Oberflächenschicht gibt es bei Garvorgängen eine unerwünschte Migration des Polykondensationskatalysators auf Basis von Antimon in die Lebensmittel, die in der Folie verpackt sind. Im Gegensatz zu einer PET-Folie ohne Peel-Schicht, bei der es völlig ausreichend ist, die Oberfläche antimon-frei herzustellen, um Antimonmigration zu verhindern, ist diese Maßnahme bei peelfähigen Oberflächen nicht ausreichend. Von entscheidender Bedeutung ist hierbei, ob die Deckschicht im Wesentlichen kristallin oder amorph ist. So neigen beispielsweise Folien, bei denen die Deckschichten im Wesentlichen amorph sind - wie dies der Fall ist bei den beschriebenen Peelfolien - deutlich mehr zur Migration als Folien mit kristallinen Deckschichten. Diese Neigung zu Migration wird insbesondere dann weiter verstärkt, wenn die Deckschichten Bestandteile mit niedrigem Glaspunkt enthalten, was jedoch für gute Peeleigenschaften erforderlich ist.

Die in der industriellen Praxis üblicherweise verwendeten Katalysatoren zur Polykondensation von Polyestern sind Antimon-, Titan- und Germaniumverbindungen. Titan enthaltende Katalysatoren haben die höchste katalytische Aktivität, gefolgt von Germaniumkatalysatoren. Antimonkatalysatoren weisen die geringste relative Aktivität auf. Dennoch wird der bei weitem überwiegende Teil der auf dem Weltmarkt verwendeten Polyester mit Hilfe von Antimonkatalysatoren hergestellt. Dies liegt daran, dass Germaniumkatalysatoren auf Grund ihres extrem hohen Preises in der Regel unwirtschaftlich sind, und Titankatalysatoren bei Polyestern mit hohem Schmelzpunkt wie PET oder PEN zu einer unerwünschten Gelbfärbung der so hergestellten Folie führen können.

Die geringe relative Aktivität erfordert größere Einsatzmengen von Antimonkatalysatoren bei der Herstellung von Polyesterrohstoffen. Die üblichen Konzentrationen von Antimonkatalysatoren im Polyesterrohstoff liegen im Bereich von 150 bis 350 ppm. Diese Konzentrationen führen zu einer merklichen Trübungserhöhung und Glanzreduzierung der Folie, die unerwünscht ist. Daneben besteht zusätzlich ein großes Interesse daran, die Antimonkonzentration in Polyesterprodukten deutlich zu verringern - wenn nicht sogar zu vermeiden, da u. a. auch EU-Richtlinien Grenzwerte für die Antimonmigration vorschreiben. Insbesondere bei mehrschichtigen Folien, bei denen die Basisschicht aus PET (Polyethylenterephthalat) und die auf der Basisschicht aufgebrachten Deckschichten eine geringe Kristallinität und geringe Glasübergangstemperaturen aufweisen, sind diese Grenzwerte nur schwer einzuhalten.

Aufgabe der vorliegenden Erfindung war es, eine heißsiegelbare und peelfähige, biaxial orientierte Polyesterfolie zur Verfügung zu stellen, die die Nachteile der Folien nach dem Stand der Technik nicht mehr aufweist und sich insbesondere dadurch auszeichnet, dass

- die optischen Eigenschaften der Folie sehr gut sind [dies bedeutet beispielsweise eine niedrige Trübung (bevorzugt kleiner als 20 %) und einen hohen Glanz (bevorzugt größer als 60) für beide Seiten der Folie];
- das Migrationsverhalten der Peelschicht sehr gut ist [für die hier vorliegende peelfähige Folie bedeutet dies insbesondere, dass die Gesamtmigration bei hohen Temperaturen (175 °C) in fetthaltigen Lebensmitteln (Olivenöl) bevorzugt 10 mg/dm$^2$ Oberfläche oder weniger ist (Test für die Verwendung im Backofen) und die Migration von Antimon in sauren Lebensmitteln (3% Essigsäure) bei 100 °C nicht nachweisbar ist];
- die sensorischen Eigenschaften als gut (bevorzugt $\leq 2{,}5$) bewertet werden und
- bei der Herstellung der Folie gewährleistet ist, dass das Regenerat in einer Menge von bis zu ca. 60 Gew.-% wieder der Extrusion zugeführt werden kann, ohne dass dabei die physikalischen, insbesondere aber die optischen Eigenschaften der Folie nennenswert negativ beeinflusst werden.

Gelöst wird die Aufgabe durch die Bereitstellung einer biaxial orientierten Poylesterfolie, welche eine Basisschicht (B) und eine auf dieser Schicht (B) befindliche Deckschicht (A) aufweist, wobei die Deckschicht (A) heißsiegelbar und gegenüber amorphem und kristallinem Polyester peelfähig ist und zumindest einen Polyester enthält, der aromatische und aliphatische Dicarbonsäureeinheiten aufweist, und wobei beide Schichten (A) und (B) titankataysierten Polyester mit einer Titankonzentration von 1 bis 150 ppm enthalten.

Bevorzugt ist die Schicht (B) mindestens 2 $\mu$m dick.

Dabei bedeutet ppm die Konzentration von Titan (Gewichtsteile bezogen auf Titan, das aus dem verwendeten Polykondensationskatalysator, z. B. Kalium-Titanyloxalat, stammt) im titankatalysierten Polyester, der bei der Herstellung der Schichten (A) und (B) verwendet wird. Bevorzugt beträgt die Titankonzentration in diesen Polyestern 2 bis 100 ppm, insbesondere 5 bis 50 ppm.

In einer bevorzugten Ausführungsform enthalten die Schichten (A) und (B) oder die gesamte Folie als Polyester ausschließlich titankatalysierte Polyester. Bevorzugt ist weiterhin, dass die Schichten (A) und (B) oder die gesamte Folie als Polymere ausschließlich titankatalysierte Polyester enthalten.

Die peelfähige, coextrudierte, biaxial orientierte Folie gemäß der vorliegenden Erfindung ist zumindest zweischichtig aufgebaut. Sie besteht dann aus der Basisschicht (B) und der auf dieser durch Coextrusion aufgebrachten siegelbaren und peelfähigen Deckschicht (A), wobei beide Schichten auf Basis von titankatalysierten Polyestern aufgebaut sind.

In einer bevorzugten Ausführungsform ist die Folie drei- oder mehr als dreischichtig aufgebaut. Im Falle der besonders bevorzugten dreischichtigen Ausführungsform besteht sie aus der Schicht (B), der Deckschicht (A) und einer der Deckschicht (A) gegenüberliegenden Deckschicht (C) - Schichtaufbau ABC. In diesem Fall sind zumindest die Schicht (B) und die Deckschicht (A) auf Basis von titankatalysierten Polyestern aufgebaut. In einer vorteilhaften Ausführungsform der Erfindung sind alle drei Schichten auf Basis von titankatalysierten Polyestern aufgebaut.

Bei einer vierschichtigen Ausführungsform (ABDC) enthält die Folie eine zusätzliche Schicht (D), die zwischen der Schicht (B) und der Deckschicht (C) liegt. In diesem Fall sind zumindest die Schicht (B) und die Deckschicht (A) auf Basis von titankatalysierten Polyestern aufgebaut. In einer vorteilhaften Ausführungsform der Erfindung sind alle vier Schichten auf Basis von titankatalysierten Polyestern aufgebaut.

Ist nur eine der beiden Schichten (A) und (B), z. B. die Deckschicht (A), auf Basis von titankatalysierten Polyestern aufgebaut, die Schicht (B) aber weiterhin auf Basis von antimonkatalysierten Polyestern, so ist das Migrationsverhalten der Folie im Sinne der Erfindung weiterhin unzureichend. In diesem Fall findet die Migration des Katalysators der Schicht (B) durch die Deckschicht (A) statt, die infolge ihres morphologischen Aufbaus (bevorzugt amorph) keine oder nur eine unzureichende Sperrwirkung darstellt. Im umgekehrten Falle verhält es sich ähnlich.

Erfindungsgemäß beträgt die Dicke der Schicht (B) mindestens 2 μm. Ist die Schichtdicke geringer als 2 μm, so ist die Sperrwirkung dieser Schicht (B), z. B. gegenüber einer aus antimonkatalysierten Polyestern aufgebauten Schicht (C) oder (D) oder (C) und (D), weiterhin im Sinne der Erfindung unzureichend.

Sind sämtliche Schichten der erfindungsgemäßen Polyesterfolie aus Polymeren bzw. Polyestern aufgebaut, die nicht antimonkatalysiert hergestellt worden sind, so kann die Dicke der Basisschicht (B) auch geringer als 2 μm sein.

Das Material der Deckschicht (A) besteht überwiegend aus Polyester. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von bevorzugt 25 bis 95 Mol-%, insbesondere 40 bis 90 Mol-%, besonders bevorzugt 50 bis 88 Mol-%, enthalten. Die auf die aliphatischen Dicarbonsäuren zurückgehenden Einheiten sind in dem Polyester in einer Menge von bevorzugt 5 bis 75 Mol-%, insbesondere 10 bis 60 Mol-%, besonders bevorzugt 12 bis 50 Mol-%, enthalten, wobei die Mol%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Pimelinsäure, Korksäure, Azelainsäure, Sebazinsäure, Glutarsäure und Adipinsäure. Insbesondere bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure. Bevorzugte Diole sind Ethylenglykol, Butylenglykol und Neopentylglykol.

Die heißsiegelbare und peelfähige Deckschicht (A) besitzt gegenüber amorphem und kristallinem Polyester [z. B. Menüschalen aus amorphem / kristallinem Polyethylenterephthalat (APET/CPET)] eine Siegelanspringtemperatur von bevorzugt weniger als 150 °C und eine Siegelnahtfestigkeit von bevorzugt mindestens 2 N/15 mm. Die Deckschicht (A) hat gegenüber amorphem und kristallinem Polyester (z. B. APET und CPET) eine maximale Siegeltemperatur im Allgemeinen von ca. 220 °C, wobei im gesamten Siegelbereich eine gegenüber amorphem und kristallinem Polyester peelfähige Folie erhalten wird.

Unter heißsiegelbar wird hier die Eigenschaft einer coextrudierten Polyesterfolie verstanden, die zumindest eine Schicht [= heißsiegelbare Deckschicht (A)] enthält, die mittels Siegelbacken durch Anwendung von Wärme (130 bis 220 °C) und Druck (2 bis 5 bar) in einer bestimmten Zeit (0,2 bis 2 s) mit sich selbst (Fin-Siegelung) bzw. mit einem Substrat aus thermoplastischem Kunststoff (hier insbesondere PET) verbunden werden kann, ohne dass dabei die Trägerschicht [= Basisschicht (B)] selbst plastisch wird.

Unter peelfähig wird hier die Eigenschaft einer coextrudierten Polyesterfolie verstanden, die zumindest eine Schicht [= heißsiegelbare und peelfähige Deckschicht (A)] enthält, die nach der Heißsiegelung auf ein Substrat (hier im wesentlichen PET) derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf.

Zur Verbesserung der Handhabung der Folie, der Verarbeitbarkeit der Folie, insbesondere aber auch zur Verbesserung des Abziehverhaltens der Folie von z. B. einer Menüschale (Peelfähigkeit), ist es von Vorteil, die Deckschicht (A) weiter zu modifizieren.

Dies geschieht am Besten mit Hilfe von geeigneten Antiblockmitteln (Partikel), die der Siegelschicht (A) gegebenenfalls zugegeben werden, und zwar in Mengen, dass sich das Abziehverhalten der Folie von der Menüschale weiter verbessert, ein Verblocken der Folie verhindert und das Verarbeitungsverhalten der Folie optimiert wird.

Es hat sich als günstig erwiesen, dass zumindest die Deckschicht (A) Partikel in einer bestimmten Größe und in einer bestimmten Konzentration enthält. Es können auch Mischungen von zwei und mehreren verschiedenen Partikelsystemen oder Mischungen von Partikelsystemen gleicher chemischer Zusammensetzung, aber unterschiedlicher Partikelgröße der Deckschicht (A) zugegeben werden.

Übliche Antiblockmittel (auch als "Pigmente" oder "Partikel" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Titandioxid, Kaolin oder vernetzte Polystyrol- oder Arcrylat-Partikel. Die Partikel können der Schicht in den jeweils vorteilhaften Konzentrationen, z. B. als glykolische Dispersion, während der Polykondensation oder über Masterbatche bei der Extrusion zugegeben werden.

Bevorzugte Partikel sind synthetisch hergestellte, amorphe $SiO_2$-Partikel. Diese Partikel werden hervorragend in die Polymermatrix eingebunden und erzeugen nur wenige Hohlräume. Hohlräume entstehen an den Partikeln bei der biaxialen Orientierung, verursachen im Allgemeinen Trübung und sind daher für die vorliegende Erfindung wenig geeignet. Zur Herstellung der $SiO_2$-Partikel werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann es getrocknet und weiterverarbeitet werden. Durch Kontrolle des Waschwasser-pH-Wertes und der Trocknungsbedingungen können die wichtigen physikalischen Parameter wie z. B. Porenvolumen, Porengröße und die Größe der Oberfläche des anfallenden Silikagels variiert werden. Die gewünschte Partikelgröße (z. B. den $d_{50}$-Wert)

erhält man durch geeignete Mahlung des Silikagels (z. B. mechanisch oder hydromechanisch). Solche Partikel können z. B. über die Firmen Grace, Fuji, Degussa oder Ineos bezogen werden.

Es hat sich als besonders vorteilhaft erwiesen, Teilchen mit einem mittleren Partikeldurchmesser $d_{50}$ von 2,5 bis 8 $\mu$m zu verwenden. Zur Bereitstellung der gewünschten Peeleigenschaften hat es sich als günstig erwiesen, wenn die Deckschicht (A) Partikel in einer Konzentration von 0,5 bis 10 Gew.-% enthält, bezogen auf das Gesamtgewicht von (A).

Zur Erzielung der vorgenannten Eigenschaften, insbesondere der optischen Eigenschaften der siegelbaren und peelfähigen Folie, hat es sich insbesondere bei einer dreischichtigen Folie mit ABC-Aufbau als zweckmäßig erwiesen, die Menge an Partikeln in der Schicht (B) niedriger einzustellen als in der Deckschicht (A). Bei der dreischichtigen Folie vom genannten Typ sollte zweckmäßiger Weise in der Schicht (B) die Menge der Partikel bevorzugt zwischen 0 und 1 Gew.-% liegen. Als besonders zweckmäßig hat es sich erwiesen, in die Basisschicht nur Partikel einzuarbeiten, wie sie über das arteigene Regenerat (Rezyklat) in die Folie gelangen. Die optischen Eigenschaften der Folie, insbesondere die Trübung der Folie, sind dann besonders gut.

Die Schicht (B) der Folie besteht zu mindestens 80 Gew.-% aus thermoplastischem Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT), aus Ethylenglykol, Terephthalsäure und Biphenyl-4,4'-dicarbonsäure (= Polyethylenterephthalatbibenzoat, PETBB) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. Im Allgemeinen können für die Schicht (B) auch Copolymere oder Mischungen oder Blends aus den genannten Homo- und/oder Copolymeren verwendet werden. (Bei der Angabe der Mengen für die Dicarbonsäuren bildet die Gesamtmenge aller Dicarbonsäuren 100 Mol-%. Analog bildet die Gesamtmenge aller Diole auch 100 Mol-%.)

Geeignete andere aromatische Dicarbonsäuren sind bevorzugt Benzoldicarbonsäuren, Naphthalindicarbonsäuren (beispielsweise Naphthalin-1,4-oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuien besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Besonders vorteilhaft ist es, wenn in der Schicht (B) ein Polyester-Copolymer auf Basis von Terephthalat und geringen Mengen (bevorzugt < 5 Mol-%) Isophthalsäure oder auf Basis von Terephthalat und geringen Mengen (bevorzugt < 5 Mol-%) Naphthalin-2,6-dicarbonsäure verwendet wird. In diesem Fall sind die Herstellbarkeit der Folie und die optischen Eigenschaften der Folie besonders gut. Die Schicht (B) enthält dann im Wesentlichen ein Polyestercopolymeres, das überwiegend aus Terephthalsäure- und Isophthalsäure-Einheiten und/oder Terephthalsäure- und Naphthalin-2,6-dicarbonsäure-Einheiten und aus Ethylenglykol-Einheiten zusammengesetzt ist.

Im Falle der bevorzugten dreischichtigen Folie mit ABC-Aufbau oder bei der vierschichtigen Folie mit ABCD-Aufbau bestehen die Polymere für die weiteren Schichten (C und D) im Wesentlichen bevorzugt aus den für die Schicht (B) beschriebenen Polymeren. Um das Verarbeitungsverhalten der Folie nach der vorliegenden Erfindung weiterhin zu verbessern, ist es von Vorteil, in die Schicht (B) bei einem zweischichtigen Folienaufbau (AB) bzw. in die nicht siegelfähige Deckschicht (C) bei einem dreischichtigen Folienaufbau (ABC) ebenfalls Partikel einzuarbeiten, wobei in den vorgenannten Fällen insbesondere für die Schicht (C) zweckmäßiger Weise die gleichen Pigmente in gleicher oder ähnlicher Konzentration verwendet werden können wie für die Deckschicht (A).

Bei allen Ausführungsformen der erfindungsgemäßen Folie liegt die Dicke der Deckschicht (A) bevorzugt im Bereich von 0,7 und 10 $\mu$m.

Die Dicke der anderen, bevorzugt nicht siegelbaren Deckschicht (C) kann gleich der Dicke der Deckschicht (A) sein oder von dieser verschieden; ihre Dicke liegt im Allgemeinen zwischen 0,5 und 5 $\mu$m.

Die Gesamtdicke der erfindungsgemäßen Polyesterfolie kann innerhalb weiter Grenzen variieren. Sie beträgt bevorzugt 3 bis 500 $\mu$m, insbesondere 4 bis 450 $\mu$m, vorzugsweise 5 bis 400 $\mu$m, wobei bei einem ABC-Aufbau die Schicht (B) einen Anteil von vorzugsweise 20 bis 97 % an der Gesamtdicke hat. Bei einem ABCD-Aufbau ist die B-Schicht bevorzugt mindestens 2 $\mu$m dick, und die Schicht (B) hat vorzugsweise einen Anteil von 20 bis 97 % der Gesamtdicke.

Die Basisschicht (B) und die anderen Schichten können zusätzlich übliche Additive wie Stabilisatoren (UV, Hydrolyse), flammhemmende Stoffe oder Füller enthalten. Sie werden zweckmäßig dem Polymer bzw. der Polymermischung bereits vor dem Aufschmelzen zugesetzt.

Darüber hinaus können die titankatalysierten Polyester ein oder mehrere im Polyester lösliche Farbmittel enthalten. Diese Farbmittel können dem Polyester bereits bei der Polykondensation zugesetzt werden oder aber mittels Masterbatch-Technologie unmittelbar vor der Folienherstellung zugegeben werden. Zur Kompensation einer leichten Gelbfärbung können kleine Mengen (bevorzugt < 100 ppm) lösliche organische Farbmittel oder anorganische Zusätze wie zum Beispiel Cobaltacetat verwendet werden. Wird eine Einfärbung der Folie erwünscht, so können größere Mengen (bevorzugt bis 20 %) organische oder anorganische Farbmittel bzw. -pigmente verwendet werden.

Geeignete lösliche Farbmittel sind beispielsweise diejenigen, die von der Firma Clariant (DE) unter dem Handelsnamen ®Polysynthren oder von der Firma Bayer (DE) unter dem Handelsnamen ®Macrolex angeboten werden.

In einer bevorzugten Ausführungsform ist die erfindungsgemäße Folie auf der siegelfähigen Deckschicht (A) mit einer Antibeschlag- oder Antifog-Beschichtung versehen. Dies macht die Folie insbesondere als Verpackungsmaterial für gekühlte Waren (z. B. Nahrungs- und Genussmittel) geeignet, da die Beschichtung ein Beschlagen der Folie verhindert und somit die Transparenz der Folie erhalten bleibt. Das Beschlagen wird durch Feuchtigkeit hervorgerufen, die aus dem verpackten Gut austritt und an einer unbehandelten Folie in Form unterschiedlich großer Tropfen kondensiert.

Die Antifog-Beschichtung auf der Deckschicht (A) zeichnet sich dadurch aus, dass sie neben Wasser die folgenden Komponenten enthält:

Polyvinylpyrrolidon (= Komponente i),
ein Tensid (= Komponente ii) und optional
ein Polymer, das die Anbindung der anderen Komponenten an die Polyesteroberfläche verbessert (haftvermittelndes Polymer = Komponente iii).

Die Gesamtkonzentration aller Komponenten i) bis iii) in Wasser liegt bevorzugt im Bereich von 1 bis 8 Gew.-%. Sofern nichts anderes gesagt ist, handelt es sich bei allen Mengenangaben um Gewichtsprozent, bezogen auf das Gewicht der gebrauchsfertigen Beschichtungszubereitung.

Das Polyvinylpyrrolidon wird bevorzugt mit einem Molekulargewicht ($M_w$) zwischen 20 und 2500 kDalton, besonders bevorzugt zwischen 40 und 1500 kDalton, eingesetzt. Der Anteil des Polyvinylpyrrolidons in der Beschichtungslösung beträgt meist 0,3 bis 4,0 Gew.-%, bevorzugt 0,5 bis 3,5 Gew.-%. Bei Verwendung von Polyvinylpyrrolidon mit niedrigeren Molekulargewichten wird die Abwaschbeständigkeit der Beschichtung schlechter, bei höheren Molekulargewichten wird die Beschichtungslösung zu viskos.

Unter Tensiden versteht man Moleküle, die aus einem hydrophoben und einem hydrophilen Teil bestehen, man sagt, sie sind amphiphil.

Das in der oben beschriebenen Beschichtungszusammensetzung genannte Tensid wird in einer Konzentration von ca. 0,1 bis 2,5 Gew.-%, bevorzugt von 0,3 bis 2,0 Gew.-%, verwendet und ist bevorzugt ein ionisches, besonders bevorzugt ein anionisches Tensid und wird besonders bevorzugt aus der Gruppe der Alkylsulfate, Alkylbenzolsulfate, Alkylethersulfate oder Sulfobernsteinsäureester oder deren Salzen gewählt.

Die Polymere, die die Anbindung des Polyvinylpyrrolidons an die Polyesteroberfläche verbessern, werden bevorzugt in Form einer wässrigen Lösung oder Dispersion eingesetzt. Die Konzentration dieser Polymere in der fertigen Beschichtungslösung beträgt ca. 0,3 bis 4,0 Gew.-%, bevorzugt 0,5 bis 3,5 Gew.-%. Geeignete Polymere dieser Art sind Acrylate wie sie bspw. beschrieben sind in der WO 94/13476, hydrophile Polyester (z. B. 5-Na-sulfoisophthalsäure haltige PET/IPA-Polyester wie sie bspw. beschrieben sind in EP-A-0 144 878, US-A-4,252,885 oder EP-A-0 296 620; dentritische Polyester mit Alkohol oder Säureendgruppen), Polyurethane, Butadiencopolymere mit Acrylnitril oder Methylmethacrylat, Methacrylsäure oder deren Ester.

Damit besteht die gebrauchsfertige Beschichtungszusammensetzung bevorzugt nur aus Wasser und den Komponenten i) und ii) bzw. i), ii) und iii) sowie ggf. Antiblockmitteln. "Bestehen" bedeutet hier, dass die Zusammensetzung zu mindestens 90 Gew.-%, bevorzugt mindestens 95 Gew.-% und besonders bevorzugt zu mindestens 99 Gew.-%, aus den genannten Komponenten besteht.

Nach der In-line-Beschichtung mit der Beschichtungszusammensetzung besteht die fertige Beschichtung auf der Deckschicht (A) aus dem getrockneten Rückstand (Trocknungsprodukt) der Beschichtungszusammensetzung, die dann ebenso bevorzugt nur aus dem Trocknungsprodukt der Komponenten i) und ii) bzw. i), ii) und iii) sowie ggf. Antiblockmitteln besteht. Das überschüssige Wasser bzw. verwendete Lösungsmittel ist im Prozess abgedampft.

Überraschender Weise hat sich gezeigt, dass die Beschichtung neben dem Anti-Fog-Effekt eine deutliche Reduktion der Reibung der Siegelschicht (A) gegenüber sich selbst und gegenüber der Deckschicht (C) der Folie bewirkt.

Gegenstand der vorliegenden Erfindung ist auch ein Verfahren zur Herstellung der Folie. Zur Herstellung der heißsiegelbaren und peelfähigen Deckschicht (A) werden zweckmäßiger Weise die jeweiligen Polymere direkt dem Extruder für die Deckschicht (A) zugeführt. Die Materialien lassen sich bei etwa 200 bis 280 °C extrudieren. Aus verfahrenstechnischer Sicht (Durchmischung der verschiedenen Komponenten) hat es sich dabei als besonders günstig erwiesen, wenn die Extrusion der Polymere für die Deckschicht (A) mit einem Zweischneckenextruder mit Entgasungsmöglichkeit durchgeführt wird.

Die Polymere für die Schicht (B) und für die eventuell vorhandene weitere Deckschicht (C) und gegebenenfalls die Zwischenschicht (D) werden zweckmäßig über weitere Extruder dem (Coextrusions-) System zugeführt. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung der Folie wird im Allgemeinen sequenziell durchgeführt. Eine simultane Streckung der Folie ist auch möglich, ist aber nicht notwendig. Bei der sequenziellen Streckung wird vorzugsweise erst in Längsrichtung (d. h. in Maschinenrichtung) und anschließend in Querrichtung (d. h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 60 bis 130 °C (Aufheiztemperaturen 60 bis 130 °C) und in Querrichtung in einem Temperaturbereich von 90 °C (Beginn der Streckung) bis 140 °C (Ende der Streckung) durchgeführt. Das Längsstreckverhältnis liegt bevorzugt im Bereich von 2:1 bis 5,5: 1, insbesondere von 2,3:1 bis 5:1. Das Querstreckverhältnis liegt allgemein im Bereich von 2,4:1 bis 5:1, bevorzugt von 2,6:1 bis 4,5:1.

Der bevorzugte Temperaturbereich, bei dem die biaxiale Streckung durchgeführt wird, beträgt bei der Längsstreckung (MDO) 60 bis 110 °C. Die Aufheiztemperaturen der Folie in der Längsstreckung liegen dabei in einem Bereich von 60 bis 105 °C. Bei der Querstreckung (TDO) liegen die Temperaturen der Folie in einem Bereich von 90 °C (Beginn der Streckung) bis 140 °C (Ende der Streckung). Das Längsstreckverhältnis liegt bei diesem bevorzugten Temperaturbereich im Bereich von 2:1 bis 4,8:1, bevorzugt von 2,3:1 bis 4,6:1. Das Querstreckverhältnis liegt allgemein im Bereich von 2,4:1 bis 5:1, bevorzugt von 2,6:1 bis 4,5:1.

Vor der Querstreckung kann man eine oder beide Oberflächen der Folie nach den an sich bekannten Verfahren in-line beschichten. Die In-line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letzteres wird beispielsweise durch Auftragung von Barrierebeschichtungen wie EVOH, PVOH o. ä. erreicht. Vorzugsweise werden solche Schichten dann auf die nicht siegelbare Oberfläche, z. B. die Oberfläche (C), der Folie aufgetragen. Darüber hinaus kann die In-line-Beschichtung dazu verwendet werden, die Folie mit Substanzen zu beschichten, die Antifogeigenschaften aufweisen. In diesem Fall wird üblicher Weise die Deckschicht (A) beschichtet.

Zur Aufbringung der Antifog-Beschichtung wird die erfindungsgemäße biaxial orientierte Polyesterfolie in-line auf der siegelfähigen Schicht beschichtet, d. h. die Beschichtung wird bevorzugt während des Folienherstellprozesses vor der Querstreckung aufgebracht. Um eine gute Benetzung der Polyesterfolie mit der wässrigen Beschichtungslösung oder -dispersion zu erreichen, wird die Oberfläche bevorzugt zunächst coronabehandelt. Die Beschichtung kann mit einem gängigen geeigneten Verfahren wie mit einem Schlitzgießer oder einem Sprühverfahren aufgetragen werden.

Besonders bevorzugt ist die Aufbringung der Beschichtung mittels des "Reverse gravure-roll coating"-Verfahrens, bei dem sich die Beschichtung äußerst homogen mit Antragsgewichten zwischen 1 und 3 g/m² auftragen lässt (Nassantrag). Ebenfalls bevorzugt ist die Auftragung durch das Meyer-Rod-Verfahren, mit dem sich größere Beschichtungsstärken erzielen lassen. Die Beschichtung auf der fertigen Folie weist eine Dicke von ca. 5 bis 500 nm, bevorzugt 30 bis 200 nm, auf.

Zudem kann man die der Antifog-Beschichtung gegenüberliegende Oberfläche der Folie beschichten. Diese In-line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letztere wird beispielsweise durch Auftragung von Barrierebeschichtungen wie EVOH, PVOH o. ä. erhalten.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Das Migrationsverhalten der Folie gemäß der vorliegenden Erfindung ist hervorragend. Die Gesamtmigration bei 175 °C ist bevorzugt kleiner/gleich 10 mg/dm². Die Antimonmigration ist bevorzugt < 1 μg/dm².

Der Glanz der Folienoberfläche (B) im Falle einer zweischichtigen Folie bzw. der Glanz der Folienoberfläche (C) bei einer dreischichtigen Folie ist bevorzugt größer als 100 (gemessen nach DIN 67530 in Anlehnung an ASTM-D 523-78 und ISO 2813 mit Einstrahlwinkel 20°). In einer weiteren bevorzugten Ausführungsform beträgt der Glanz dieser Seiten mehr als 110 und in einer besonders bevorzugten Ausführungsform mehr als 120. Diese Folienoberflächen eignen sich daher insbesondere für eine weitere funktionelle Beschichtung, für die Bedruckung oder für die Metallisierung.

Die Trübung der Folie ist bevorzugt kleiner als 20 %. In einer weiteren bevorzugten Ausführungsform beträgt die Trübung der Folie weniger als 17 % und in einer besonders bevorzugten Ausführungsform weniger als 14 %.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich hervorragend zum Verpacken von Nahrungs- und Genussmitteln, insbesondere für die Verpackung von Nahrungs- und Genussmitteln in Menüschalen, bei denen peelfähige Polyesterfolien zum Öffnen der Verpackung verwendet werden.

Die nachstehenden Tabellen 1 und 2 fassen die wichtigsten bevorzugten Folieneigenschaften bzw. Eigenschaften der Antifog-Beschichtung noch einmal zusammen. In Tabelle 2 betreffen die Zeilen 1 bis 4 die wässrige Beschichtungszusammensetzung und die Zeilen 5 bis 6 die fertige (trockene) Beschichtung auf der Deckschicht (A).

**Tabelle 1**

| | bevorzugter Bereich | besonders bevorzugt | ganz besonders bevorzugt | Einheit | Messmethode |
|---|---|---|---|---|---|
| Konzentration des Katalysators auf Basis von Titan in dem Polyester der Schichten (A) und (B) | 1 bis 150 | 2 bis 100 | 5 bis 50 | ppm Ti | |
| Dicke der Schicht (B) | größer/gleich 2 | größer/gleich 3 | größer/gleich 4 | $\mu$m | |
| Dicke der Deckschicht (A) | 0,7 bis 10 | 0,8 bis 9 | 0,9 bis 8 | $\mu$m | |
| Dicke der Folie | 3 bis 500 | 4 bis 450 | 5 bis 400 | $\mu$m | |
| **Eigenschaften** | | | | | |
| Siegelnahtfestigkeit von DS (A) gegen APET oder CPET | 2 bis 8 | 2,2 bis 8 | 8 2,4 bis | N/15 mm | |
| Gesamtmigration (Olivenöl, 175 °C, 2 h) | kleiner/gleich 10 | < 10 | < 9 | mg/dm$^2$ | DIN EN 1186-4 |
| Antimonmigration | < 1 | < 0,5 | < 0,3 | $\mu$g/dm$^2$ | DIN EN 13130-1 |
| Sensorische Eigenschaften (Wasser und Bratfett) | kleiner/gleich 2,5 | kleiner/gleich 2 | kleiner/gleich 1,5 | Noten | DIN 10955 |
| DS = Deckschicht | | | | | |

**Tabelle 2**

| Beschichtungskomponenten | bevorzugter Bereich | besonders bevorzugt | Einheit |
|---|---|---|---|
| Polyvinylpyrrolidon, Anteil | 0,3 bis 4,0 | 0,5 bis 3,5 | Gew.-% |
| Polyvinylpyrrolidon, $M_w$ | 20 bis 2500 | 40 bis 1500 | kDalton |
| Tensid, Anteil | 0,1 bis 2,5 | 0,3 bis 2,0 | Gew.-% |

(fortgesetzt)

| Beschichtungskomponenten | bevorzugter Bereich | besonders bevorzugt | Einheit |
|---|---|---|---|
| optionales Polymer, Anteil | 0,3 bis 4,0 | 0,5 bis 3,5 | Gew.-% |
| Dicke der Beschichtung | 5 bis 500 | 30 bis 200 | nm |
| Kontaktwinkel $\alpha$ gegen Wasser | < 40 | < 35 | o |

Zur Charakterisierung der Rohstoffe und der Folien wurden im Rahmen der vorliegenden Erfindung die folgenden Messmethoden benutzt:

DIN: Deutsches Institut für Normung
ASTM: American Society for Testing and Materials
ISO: Int. Org. f. Standardization

**Gesamtmigration**

Die Gesamtmigration wird nach DIN EN 1186-4:2002 ("Prüfverfahren für die Gesamtmigration in Olivenöl mittels Zelle") gravimetrisch bestimmt. Dafür wird die Peelschicht bzw. die Lebensmittelkontaktseite der Folie in Zelltyp D (in DIN EN 1186-1 beschrieben) für 2 Stunden in Kontakt mit Olivenöl gemäß Anhang A. 1 von DIN EN 1186-1 bei 175 °C gebracht. Die Messwerte werden in mg/dm$^2$ Kontaktfläche angegeben. Die Nachweisgrenze ist 3 mg/dm$^2$.

**Antimonmigration**

Die Antimonmigration wird entsprechend der Norm DIN EN 13130-1 bestimmt. Die Peelschicht bzw. die Lebensmittelkontaktseite der Folie wird in Zelltyp D mit 3 Gew.-% Essigsäure für 30 Minuten bei 130 °C und dann 10 Tage bei 40 °C kontaktiert. Die Bestimmung des Antimons in der Essigsäure erfolgt mittels AAS mit der Hydrid-Methode. Die Menge Antimon wird in $\mu$g/dm$^2$ Kontaktfläche angegeben. Die Nachweisgrenze beträgt 0,2 $\mu$g Sb/dm$^2$.

**Sensorische Eigenschaften**

Die Prüfung wird nach DIN 10955 durchgeführt. Das Prüfmuster wird in direktem Kontakt mit dem Prüflebensmittel Wasser und Bratfett für 20±2 Stunden bei 23±2 °C im Dunkeln gelagert. Anschließend werden die Prüflebensmittel in einem Mikrowellenofen bei 800 Watt auf 100 °C erhitzt. Dann wird der Geschmack des Prüflebensmittels, das mit dem Prüfmuster erhitzt wurde, in einer erweiterten Dreiecksprüfung nach DIN ISO 4120 von sechs Prüfern beurteilt. Als Kontrollprobe dient Wasser bzw. Fett, das in einem Glasgefäß ohne Prüfinuster erhitzt wurde. Aus folgenden Prüfnoten werden die Mittelwerte gebildet:

0 = keine wahrnehmbare Geschmacksabweichung
1 = gerade wahrnehmbare Geschmacksabweichung (noch schwer definierbar)
2 = schwache Geschmacksabweichung
3 = deutliche Geschmacksabweichung
4 = starke Geschmacksabweichung

**Messung des mittleren Durchmessers $d_{50}$**

Die Bestimmung des mittleren Durchmessers $d_{50}$ wird mittels Laser auf einem Malvern Master Sizer (Fa. Malvern Instruments, GB) mittels Laserscannung durchgeführt (andere Messgeräte sind z. B. Horiba LA 500 oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößeverteilung bestimmt: Der Schnittpunkt des 50%-Ordinatenwertes mit der Summenkurve liefert auf der Abszissenachse den gewünschten $d_{50}$-Wert (auch Median genannt).

**SV-Wert**

Der SV-Wert des Polymers wird durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel}-1) \bullet 1000.$$

**Siegelnahtfestigkeit**

Zur Bestimmung der Siegelnahtfestigkeit wird ein Folienstreifen (100 mm lang x 15 mm breit) auf die APET-Seite eines entsprechenden Streifens der APET/CPET-Menüschale gelegt und bei der eingestellten Temperatur von ≥ 140 °C, einer Siegelzeit von 0,5 s und einem Siegeldruck von 3 bar (Siegelgerät HSG/ET der Firma Brugger, München, DE, beidseitig beheizte Siegelbacke) gesiegelt. Entsprechend werden die gesiegelten Streifen in die Zugprüfmaschine (z. B. Zwick) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).
(APET = amorphes PET; CPET = kristallines PET)

**Bestimmung der Mindestsiegeltemperatur (= Siegelanspringtemperatur)**

Mit dem Siegelgerät HSG/ET der Firma Brugger werden wie zuvor bei der Messung der Siegelnahtfestigkeit beschrieben heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Die 180°-Siegelnahtfestigkeit wird wie bei der Bestimmung der Siegelnahtfestigkeit gemessen. Die Mindestsiegeltemperatur ist die Temperatur, bei der eine Siegelnahtfestigkeit von mindestens 1,5 N/15 mm erreicht wird.

**Trübung**

Die Trübung wird nach ASTM-D 1003-52 bestimmt.

**Glanz**

Der Glanz der Folie wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Messung des Kontaktwinkels a**

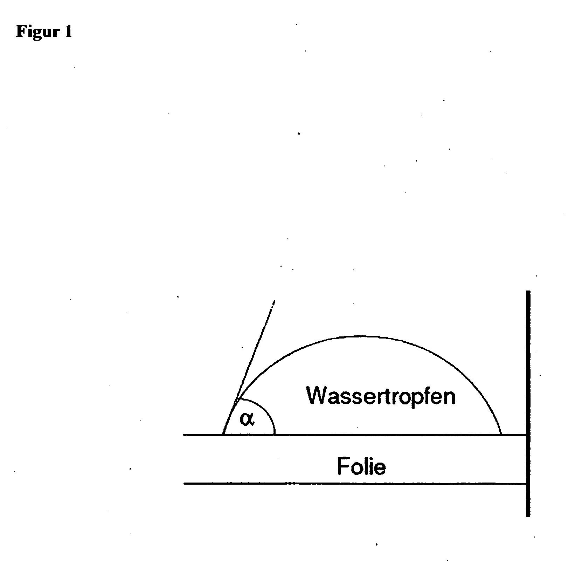

Der Kontaktwinkel $\alpha$ gegenüber Wasser (siehe Figur 1) wird gemessen und als Maß für die Hydrophilie der Folienoberfläche benutzt. Je kleiner der Kontaktwinkel $\alpha$ ist, desto größer ist die Hydrophilie der Folienoberfläche. Die Messung wird durchgeführt an einem Goniometer G1 der Firma Krüss, Hamburg, DE.

**Bestimmung der Antibeschlag-Wirkung**

Die Antibeschlag-Eigenschaften der Polyesterfolien werden wie folgt bestimmt:
In einem auf 23 °C und 50 % relative Luftfeuchtigkeit temperierten Labor werden Folienmuster auf eine Menüschale (Länge ca. 17 cm, Breite ca. 12 cm, Höhe ca. 3 cm) aus amorphem Polyethylenterephthalat (= APET), die ca. 50 ml Wasser enthält, gesiegelt.
Die Schalen werden in einem auf 4 °C temperierten Kühlschrank gelagert und nach jeweils 10, 30 min, 4, 8 und 24 h zur Beurteilung entnommen. Die Kondensatbildung beim Abkühlen der 23 °C warmen Luft auf Kühlschranktemperatur wird geprüft. Eine mit einem wirksamen Antibeschlag-Mittel ausgerüstete Folie ist auch nach der Kondensatbildung transparent, da das Kondensat beispielsweise einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.

Eine weitere Untersuchungsmethode ist der so genannte Heiß-Dampf- oder Hot-Fog-Test. Dazu wird ein 250 ml Becherglas, das 50 ml Wasser enthält und mit der zu prüfenden Folie bespannt ist, in ein auf 70 °C temperiertes Wasserbad gestellt. Die Beurteilung ist die gleiche wie oben beschrieben. Zusätzlich kann man mit diesem Test die Langzeit-Antibeschlag-Wirkung bzw. die Abwaschbeständigkeit der Folie prüfen, da der Dampf ständig an der Folie kondensiert und wieder abläuft oder abtropft. Leichtlösliche Substanzen werden so abgewaschen, und die Antibeschlag-Wirkung lässt nach. Diese Untersuchung wird ebenfalls in einem auf 23 °C und 50 % relative Luftfeuchtigkeit temperierten Labor durchgeführt.

Im Folgenden wird die Erfindung anhand von Beispielen näher erläutert.

**Beispiel 1**

Chips aus titankatalysiertem Polyethylenterephthalat wurden dem Extruder für die Schicht (B) zugeführt. Ebenfalls wurden Chips aus titankatalysiertem Polyethylenterephthalat und Partikel dem Extruder (Zweischneckenextruder) für die nicht siegelfähige Deckschicht (C) zugeführt. Entsprechend den in untenstehender Tabelle aufgeführten Verfahrensbedingungen wurden die Rohstoffe in den beiden Extrudern aufgeschmolzen und homogenisiert.

Daneben wurde für die heißsiegelbare und peelfähige Deckschicht (A) eine Mischung, bestehend aus titankatalysiertem Polyester I, titankatalysiertem Polyester II und Antiblockmittel, hergestellt. In Tabelle 2 sind die jeweiligen Anteile der in beiden Polyestern I und II enthaltenen Dicarbonsäuren und Glykole in Mol-% und die jeweiligen Anteile der in der Mischung enthaltenen Komponenten in Gew.-% angegeben. Die Mischung wurde dem Zweischneckenextruder mit Entgasung für die Deckschicht (A) zugeführt. Entsprechend den in untenstehender Tabelle angeführten Verfahrensbedingungen wurden die Rohstoffe in dem Zweischneckenextruder aufgeschmolzen und homogenisiert.

Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung eine transparente, dreischichtige Folie mit ABC-Aufbau in einer Gesamtdicke von 25 $\mu$m hergestellt. Die Dicken der beiden Deckschichten betrugen jeweils 1,5 $\mu$m (vgl. auch Tabelle 3).

Deckschicht (A), Mischung aus:

30 Gew.-% Polyester I (= Copolymeres aus 80 Mol-% Ethylenterephthalat, 20 Mol-% Ethylenisophthalat) mit einem SV-Wert von 850, der 15 ppm Titan aus dem Polykondensationskatalysator Kalium-Titanyloxalat enthält. Die Glasübergangs temperatur von Polyester 1 beträgt ca. 75 °C. Polyester I enthält darüber hinaus 8,0 Gew.-% SYLYSIA® 430 (synthetisches $SiO_2$, Fuji, JP) mit einem Partikeldurchmesser $d_{50}$ = 3,4 $\mu$m.

70 Gew.-% Polyester II (= Copolymeres, enthaltend 40 Mol-% Ethylenazelat, 50 Mol-% Ethyltherephthalat, 10 Mol-% Ethylenisophthalat) mit einem SV-Wert von 1000, der 20 ppm Titan aus dem Polykondensationskatalysator Kalium-Titanyl oxalat enthält. Die Glasübergangstemperatur von Polyester II beträgt ca. 0 °C.

Schicht (B):

100 Gew.-% Polyethylenterephthalat (Fa. Invista, DE) mit einem SV-Wert von 800, das 15 ppm Titan aus dem Polykondensationskatalysator Kalium-Titanyloxalat enthält

Deckschicht (C), Mischung aus:

85 Gew.-% Polyethylenterephthalat mit einem SV-Wert von 800 (Fa. Invista, DE), das 15 ppm Titan aus dem Polykondensationskatalysator Kalium-Titanyloxalat enthält

15 Gew.-% titankatalysiertes Masterbatch aus 99 Gew.-% Polyethylenterephthalat (SV-Wert von 800) und 1,0 Gew.-% SYLOBLOC® 44 H (synthetisches $SiO_2$, Grace, Worms, DE), $d_{50}$ = 2,5 $\mu$m

Die Herstellungsbedingungen in den einzelnen Verfahrensschritten waren:

| Extrusion | Temperaturen | A-Schicht: | 230 | °C |
|---|---|---|---|---|
| | | B-Schicht: | 280 | °C |
| | | C-Schicht: | 280 | °C |
| | Temperatur der Abzugswalze | | 20 | °C |

(fortgesetzt)

| Extrusion | Temperaturen | | A-Schicht: | 230 | °C |
|---|---|---|---|---|---|
| | | | B-Schicht: | 280 | °C |
| | | | C-Schicht: | 280 | °C |
| Längsstreckung | Aufheiztemperaturen, 1. Aufheizwalze 70°C; letzte Aufheizwalze 100°C | | | 70-100 | °C |
| | Strecktemperatur | | | 105 | °C |
| | Längsstreckverhältnis | | | 4,0 | |
| Querstreckung | Aufheiztemperatur | | | 100 | °C |
| | Strecktemperatur | | | 135 | °C |
| | Querstreckverhältnis | | | 4,0 | |
| Fixierung | Temperatur | | | 230 | °C |
| | Dauer | | | 3 | s |

In Tabelle 4 sind die Eigenschaften der Folie dargestellt. Laut Messungen betrug die Mindestsiegeltemperatur der Folie gegenüber Menüschalen aus APET 132 °C. Die Folie wurde bei 140, 160, 180 und 200 °C gegen APET-Menüschalen gesiegelt (Siegeldruck 3 bar, Siegelzeit 0,5 s). Anschließend wurden Streifen des Verbundes aus erfindungsgemäßer Folie und Menüschale mittels Spannungs-Dehnungstester entsprechend der vorgenannten Messvorschrift auseinander gezogen. Es wurde in allen Fällen eine peelfähige Folie erhalten. Die gemessenen Siegelnahtfestigkeiten sind in Spalte 3 gelistet. Weiterhin hatte die Folie die geforderten guten optischen Eigenschaften, zeigte die gewünschte Gesamt- und Antimonmigration und das gewünschte Verarbeitungsverhalten. Weiterhin hatte die Folie eine ansprechende Optik und ansprechende sensorische Eigenschaften.

**Beispiel 2**

Im Vergleich zu dem vorgenannten Beispiel wurde bei sonst identischem Folienaufbau die Zusammensetzung der Mischung für die siegelbare und peelfähige Deckschicht (A) geändert.

Daneben wurde die Deckschichtdicke der Deckschicht (A) von 1,5 auf 2,5 $\mu$m angehoben. Die Mischung für diese Schicht besteht jetzt aus den folgenden Rohstoffen:

20 Gew.-% Polyester I (= Copolymeres aus 80 Mol-% Ethylenterephthalat, 20 Mol-% Ethylenisophthalat), der 15 ppm Titan aus dem Polykondensationskatalysator Kalium-Titanyloxalat enthält, mit einem SV-Wert von 850. Die Glasübergangstemperatur von Polyester I beträgt ca. 75 °C. Polyester I enthält darüber hinaus 10,0 Gew.-% ®Sylysia 430 (synthetisches $SiO_2$, Fuji, JP) mit einem Partikeldurchmesser von $d_{50}$ = 3,4 $\mu$m.

80 Gew.-% Polyester II, ®Vitel 1912 NSB (titankatylisierter Polyester mit einem SV-Wert von 1050, der 30 ppm Titan aus dem Polykondensationskatalysator enthält; Hersteller: Bostik-Findley, USA; der Polyester enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C.

Auf Grund des höheren Anteils von Polyester II im Blend wurden die Verfahrensparameter in der Längsstreckung leicht modifiziert. Die neuen Bedingungen für die Längsstreckung sind in untenstehender Tabelle aufgelistet.

| Längsstreckung | Aufheiztemperaturen, 1. Aufheizwalze 70°C; letzte Aufheizwalze 88°C | | 70-88 | °C |
|---|---|---|---|---|
| | Strecktemperatur | | 92 | °C |
| | Längsstreckverhältnis | | 3,4 | |

Die Mindestsiegeltemperatur der Folie gegenüber der APET-Seite von APET/CPET-Menüschalen betrug jetzt 128 °C. Die gemessenen Siegelnahtfestigkeiten sind in Spalte 3 der Tabelle 4 gelistet. Für alle Siegeltemperaturen wurden peelfähige Folien erhalten. Die Siegelnahtfestigkeiten der Folien sind vergleichbar mit denen in Beispiel 1, liegen tendenziell etwas höher, wobei die Siegelkurve etwas flacher ist. Weiterhin hatte die Folie die geforderten guten optischen Eigenschaften, zeigte die gewünschte Gesamt- und Antimonmigration und das gewünschte Verarbeitungsverhalten. Weiterhin hatte die Folie eine ansprechende Optik und ansprechende sensorische Eigenschaften.

**Beispiel 3**

Im Vergleich zu dem vorgenannten Beispiel wurde jetzt eine vierschichtige Folie vom Aufbau ABDC hergestellt. Die Zusammensetzung der Mischung und die Dicke für die siegelfähige Deckschicht (A) wurden nicht geändert. Ebenfalls nicht geändert wurde der Polyester-Rohstoff für die Schicht (B). Für den Rohstoff der Schicht (D) wurde der gleiche Rohstoff wie für die Schicht (B) verwendet, ausgenommen, dass dieser Rohstoff jetzt antimon-katalysiert ist. Für den Rohstoff der Schicht (C) gilt Analoges zum Rohstoff für die Schicht (D). An den Verfahrensparametern für die Folie wurde nichts geändert.
Deckschicht (A), Mischung aus:

20 Gew.-% Polyester I (= Copolymeres aus 80 Mol-% Ethylenterephthalat, 20 Mol-% Ethylenisophthalat mit einem SV-Wert von 850), der 15 ppm Titan aus dem Polykondensationskatalysator Kalium-Titanyloxalat enthält. Die Glasübergangstemperatur von Polyester I beträgt ca. 75 °C. Polyester I enthält darüber hinaus 10,0 Gew.% ®Sylysia 430 (synthetisches $SiO_2$, Fuji, JP) mit einem Partikeldurchmesser von $d_{50}$ = 3,4 $\mu$m.

80 Gew.-% Polyester II, ®Vitel 1912 (titankatalysierter Polyester mit einem SV-Wert von 1050, der 30 ppm Titan aus dem Polykondensationskatalysator enthält; Hersteller: Bostik-Findley, USA); der Polyester enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C.

Schicht (B):

100 Gew.-% Polyethylenterephthalat (Fa. Invista, DE), das 15 ppm Titan aus dem Polykondensationskatalysator Kalium-Titanyloxalat enthält, mit einem SV-Wert von 800

Schicht (D):

100 Gew.-% Polyethylenterephthalat mit einem SV-Wert von 800 (Fa. Invista, DE), das 300 ppm Antimon aus dem Polykondensationskatalysator Antimontrioxid ($Sb_2O_3$) enthält

Deckschicht (C), Mischung aus:

85 Gew.-% Polyethylenterephthalat mit einem SV-Wert von 800 (Fa. Invista, DE), das 300 ppm Antimon aus dem Polykondensationskatalysator Antimontrioxid ($Sb_2O_3$) enthält

15 Gew.-% antimonkatalysiertes Masterbatch aus 99 Gew.-% Polyethylenterephthalat (SV- Wert von 800) und 1,0 Gew.-% Sylobloc 44 H (synthetisches $SiO_2$, Grace, Worms, DE), $d_{50}$ = 2,5 $\mu$m

Die Mindestsiegeltemperatur der Folie gegenüber der APET-Seite von APET/CPET-Menüschalen hat sich gegenüber Beispiel 2 nicht geändert. Die Siegelnahtfestigkeiten der Folien sind vergleichbar mit denen in Beispiel 2. Weiterhin hatte die Folie die geforderten guten optischen Eigenschaften, zeigte die gewünschte Gesamt- und Antimonmigration und das gewünschte Verarbeitungsverhalten. Weiterhin hatte die Folie eine ansprechende Optik und ansprechende sensorische Eigenschaften.

**Beispiel 4**

Beispiel 1 wurde wiederholt, zusätzlich wurde die längsgestreckte Folie auf der Deckschicht (A) durch Reversgravurbeschichtung mit der unten beschriebenen Lösung aus Polyvinylpyrrolidon und Diethylhexylsulfosuccinat Natriumsalz beschichtet. Die längsgestreckte, beschichtete Folie wurde bei einer Temperatur von 100 °C getrocknet. Das Trockengewicht der Beschichtung betrug ca. 0,04 g/m$^2$.

Zur Herstellung der Beschichtungslösung wurden folgende Komponenten in Wasser gelöst:

- 1,5 Gew.-% Polyvinylpyrrolidon (®Luvitec K30; BASF AG, Mw -50 kDalton)
- 1,5 Gew.-% Diethylhexylsulfosuccinat Natriumsalz (®Lutensit A-BO; BASF AG).

Die Gew.-%-Angaben beziehen sich auf die fertige Beschichtungslösung.

In Tabelle 5 sind die Eigenschaften der Folie dargestellt. Laut Messungen betrug die Mindestsiegeltemperatur der Folie gegenüber Menüschalen aus APET 133 °C. Die Folie wurde bei 140, 160, 180 und 200 °C gegen APET-Menüschalen gesiegelt (Siegeldruck 3 bar, Siegelzeit 0,5 s). Anschließend wurden Streifen des Verbundes aus erfindungsgemäßer Folie und Menüschale mittels Spannungs-Dehnungstester entsprechend der vorgenannten Messvorschrift auseinander gezogen. Die gemessenen Siegelnahtfestigkeiten sind in Spalte 3 gelistet. Weiterhin hatte die Folie die geforderten guten optischen Eigenschaften, zeigte die gewünschte Gesamt- und Antimonmigration und das gewünschte Verarbeitungsverhalten. Weiterhin hatte die Folie eine ansprechende Optik und ansprechende sensorische Eigenschaften. Zudem zeigte die Folie sehr gute Antibeschlag-Eigenschaften, d. h. die Bildung feiner Tröpfchen wurde nicht beobachtet. Der gemessene Kontaktwinkel betrug $\alpha$ = 34° im Vergleich zu einer unbeschichteten Folie mit einem Winkel von $\alpha$ = 64°.

**Beispiel 5**

Beispiel 2 wurde wiederholt und Deckschicht (A) mit einer Antifogbeschichtung gemäß Beispiel 4 versehen.

Die Mindestsiegeltemperatur der Folie gegenüber der APET-Seite von APET/CPET-Menüschalen betrug jetzt 129 °C. Die gemessenen Siegelnahtfestigkeiten sind in Spalte 3 der Tabelle 5 gelistet. Für alle Siegeltemperaturen wurden peelfähige Folien erhalten. Die Siegelnahtfestigkeiten der Folien sind vergleichbar mit denen in Beispiel 4, liegen tendeziell etwas höher, wobei die Siegelkurve etwas flacher ist. Weiterhin hatte die Folie die geforderten guten optischen Eigenschaften, zeigte die gewünschte Gesamt- und Antimonmigration und das gewünschte Verarbeitungsverhalten. Weiterhin hatte die Folie eine ansprechende Optik und ansprechende sensorische Eigenschaften. Zudem zeigte die Folie sehr gute Antibeschlag-Eigenschaften, d. h. die Bildung feiner Tröpfchen wurde nicht beobachtet. Der gemessene Kontaktwinkel betrug $\alpha$ = 34° im Vergleich zu einer unbeschichteten Folie mit einem Winkel von $\alpha$ = 64°.

**Beispiel 6**

Beispiel 3 wurde wiederholt und Deckschicht (A) mit einer Antifogbeschichtung gemäß Beispiel 4 versehen.

Die Mindestsiegeltemperatur der Folie gegenüber der APET-Seite von APET/CPET-Menüschalen hat sich gegenüber Beispiel 5 nicht geändert. Die Siegelnahtfestigkeiten der Folien sind vergleichbar mit denen in Beispiel 5. Weiterhin hatte die Folie die geforderten guten optischen Eigenschaften, zeigte die gewünschte Gesamt- und Antimonmigration und das gewünschte Verarbeitungsverhalten. Weiterhin hatte die Folie eine ansprechende Optik und ansprechende sensorische Eigenschaften. Zudem zeigte die Folie sehr gute Antibeschlag-Eigenschaften, d. h. die Bildung feiner Tröpfchen wurde nicht beobachtet. Der gemessene Kontaktwinkel betrug $\alpha$ = 34° im Vergleich zu einer unbeschichteten Folie mit einem Winkel von $\alpha$ -64°.

**Vergleichsbeispiel 1**

Eine dreischichtige Folie ohne aliphatische Polyester in der Deckschicht A wurde hergestellt. Alle drei Schichten enthielten Polyester mit Katalysator auf Antimonbasis.

Deckschicht (A), Mischung aus:

85 Gew.-% Polyethylenterephthalat, das 300 ppm Antimon aus dem Polykondensationskatalysator Antimontrioxid ($Sb_2O_3$) mit einem SV-Wert von 800 enthält

15 Gew.-% antimonkatalysiertes Masterbatch aus 99 Gew.-% Polyethylenterephthalat (SV-ert von 800) und 1,0 Gew.-% Sylobloc 44 H (synthetisches $SiO_2$, Grace, Worms, DE), $d_{50}$ = 2,5 $\mu$m

Schicht (B):

100 Gew.-% Polyethylenterephthalat, das 300 ppm Antimon aus dem Polykondensationskatalysator Antimontrioxid ($Sb_2O_3$) mit einem SV-Wert von 800 enthält

Deckschicht (C), Mischung aus:

85 Gew.-% Polyethylenterephthalat, das 300 ppm Antimon aus dem Polykondensationskatalysator Antimontrioxid ($Sb_2O_3$) mit einem SV-Wert von 800 enthält

15 Gew.-% antimonkatalysiertes Masterbatch aus 99 Gew.-% Polyethylenterephthalat (SV-Wert von 800) und 1,0 Gew.-% Sylobloc 44 H (synthetisches $SiO_2$, Grace, Worms, DE), dso = 2,5 µm

Aufgrund des Fehlens von Polyester II wurden die Extrusions- und Längsstreckbedingungen angepasst:

| Extrusion | Temperaturen | A-Schicht: | 280 | °C |
|---|---|---|---|---|
| Längsstreckung | Aufheiztemperatur | | 70-110 | °C |
| | Strecktemperatur | | 120 | °C |

Alle andere Bedingungen waren unverändert. Die Folie ließ sich nicht gegen Menüschalen siegeln. Die Gesamtmigration in Olivenöl und die senorische Eigenschaften waren gut, aber die Antimonmigration schlecht.

**Vergleichsbeispiel 2**

Vergleichsbespiel 1 wurde wiederholt, jedoch mit titankatalysierten Polyestern in der Deckschicht A. Alle andere Parameter waren unverändert. Die Antimonmigration war gut, alle andere Eigenschaften waren unverändert.

**Vergleichsbeispiel 3**

Beispiel 1 wurde wiederholt, wobei in allen Schichten anstelle von titankatakysierten Polyestern antimonkatalysierte Polyester verwendet wurden. Die Konzentration des Antimons betrug dabei in allen Schichten 300 ppm. Ansonsten wurden keine Änderungen durchgeführt. Das Peelverhalten und die Gesamtmigration der hergestellten Folien waren gut. Die Antimonmigration war jedoch schlecht.

**Vergleichsbeispiel 4**

Vergleichsbeispiel 3 wurde wiederholt mit titankatalysiertem Polyester in der Peelschicht. Die Antimon-Konzentration in den übrigen Schichten betrug 300 ppm. Ansonsten wurden keine Änderungen durchgeführt. Das Siegel- und Peelverhalten, die Gesamtmigration und die Sensorik waren gut. Die Antimonmigration war zwar geringer, jedoch immer noch schlecht.

**Vergleichsbeispiel 5**

Beispiel 1 wurde wiederholt, jedoch mit einem anderen Siegelrohstoffin der Schicht A. Anstelle einer Mischung aus Polyester I und II wurde ein Ethylen-Vinylacetat-Copolymeres eingesetzt, das aus 24 Mol-% Vinylacetat-Einheiten bestand.

Die Extrusions- und Längsstreckbedingungen wurden angepasst:

| Extrusion | Temperaturen | A-Schicht: | 200 | °C |
|---|---|---|---|---|
| Längsstreckung | Aufheiztemperaturen | | 70-88 | °C |
| | Strecktemperatur | | 92 | °C |
| | Längsstreckverhältnis | | 3,4 | |

Das Siegel- und Peelverhalten war gut, jedoch waren die Gesamtmigration und die sensorischen Eigenschaften schlecht.

In den Tabellen 3 bis 5 sind die Folienzusammensetzungen und wichtigsten Versuchsergebnisse der Folien gemäß den Ausführungsbeispielen 1 bis 6 und Vergleichsbeispielen 1 bis 5 wiedergegeben. Die Folienzusammensetzungen der Beispiele 4 bis 6 sind mit denen der Beispiele 1 bis 3 identisch. Beispiele 4 bis 6 haben nur eine zusätzliche Antifogbeschichtung auf der Deckschicht (A) wie in Beispiel 4 beschrieben.

**Tabelle 3**

| | Katalysator in A | Katalysator in B | Zusammensetzung Polyester I Deckschicht (A) Mol-% | | | | Zusammensetzung Polyester II Deckschicht (A) Mol-% | | | | | | | | Verhältnisse PI/PII (A) Gew.-% | Glastemperaturen PI/PII/AntiPET-Polymer °C | Folienaufbau | Foliendicke µm | Schichtdicken (A)(B)(D)(C) µm | | | | Partikel (A) Durchmesser µm | Konzentration % |
|---|---|---|---|---|---|---|---|---|---|---|---|---|---|---|---|---|---|---|---|---|---|---|---|---|
| | | | TS | IS | EG | NG | AzS | SeS | AdS | TS | IS | EG | BD | WS | | | | | (A) | (B) | (D) | (C) | | |
| **Beispiele** | | | | | | | | | | | | | | | | | | | | | | | | |
| 1 | Ti | Ti | 80 | 20 | 100 | | 40 | | | 50 | 10 | 100 | | | 30/70 | 75/0 | ABC | 25 | 1,5 | 22 | | 1,5 | 3,4 | 2,40 |
| 2 | Ti | Ti | 80 | 20 | 100 | | 40 | 1 | | 45 | 10 | 100 | >60 | | 20/80 | 75/-1 | ABC | 25 | 2,5 | 21 | | 1,5 | 3,4 | 2,00 |
| 3 | Ti | Ti | 80 | 20 | 100 | | 40 | 1 | | 45 | 10 | 100 | >60 | | 20/80 | 75/-1 | ABDC | 25 | 2,5 | 5 | 16 | 1,5 | 3,4 | 2,00 |
| **Vergleichsbeispiele** | | | | | | | | | | | | | | | | | | | | | | | | |
| 1 | Sb | Sb | 100 | | 100 | | | | | 50 | 10 | 100 | | | 100/0 | - | ABA | 25 | 1,5 | 22 | | 1,5 | 2,5 | 0,15 |
| 2 | Ti | Sb | 100 | | 100 | | | | | 50 | 10 | 100 | | | 100/0 | - | ABA | 25 | 1,5 | 22 | | 1,5 | 2,5 | 0,15 |
| 3 | Sb | Sb | 80 | 20 | 100 | | 40 | | | 50 | 10 | 100 | | | 30/70 | 75/0 | ABC | 25 | 1,5 | 22 | | 1,5 | 3,4 | 2,40 |
| 4 | Ti | Sb | 80 | 20 | 100 | | 40 | | | 50 | 10 | 100 | | | 30/70 | 75/0 | ABC | 25 | 1,5 | 22 | | 1,5 | 3,4 | 2,40 |
| 5 | - | - | (EVA) | | | | (EVA) | | | | | | | | (EVA) | - | ABC | 25 | 1,5 | 22 | | 1,5 | 3,4 | 2,40 |

TS Terephthalat, IS Isophthalat, EG Ethylen, BD Butan, NG Neopentyl
AzS Azelat, SeS Sebazat, AdS Adipat, WS weitere Dicarbonsäuren und Glykole
EVA Ethylen-Vinylacetat-Copolymeres

16

**Tabelle 4**

| | | Mindestsiegel-temperatur | Siegelnahtfestigkeit gegenüber APET/CPET-Menüschalen | | | | Schältest (= Peelverhalten) | Globalmigration (Olivenöl) | Antimonmigration (3%ige Essigsäure) | Sensorische Eigenschaften | |
|---|---|---|---|---|---|---|---|---|---|---|---|
| | | | 140°C | 160°C | 180°C | 200°C | | | | Wasser | Bratfett |
| | | °C | N/15mm | | | | | mg/dm² | µg/dm² | Noten | Noten |
| Beispiele | 1 | 132 | 3,8 | 4,2 | 5,5 | 6,4 | ++++ | 6,1 | <0,2 | 1,2 | <1 |
| | 2 | 128 | 4,4 | 4,9 | 5,9 | 6,6 | ++++ | 5,8 | <0,2 | 1,3 | <1 |
| | 3 | 128 | 4,4 | 4,9 | 5,9 | 6,6 | ++++ | 6,7 | <0,2 | 1,3 | <1 |
| V-Beispiele | 1 | keine | (keine Siegelung) | | | | keine Siegel. | < 3 | 1,5 | 1,0 | <1 |
| | 2 | keine | (keine Siegelung) | | | | keine Siegel. | < 3 | <0,2 | 1,0 | <1 |
| | 3 | 132 | 3,8 | 4,2 | 5,5 | 6,4 | ++++ | 6,3 | 3,6 | 1,2 | <1 |
| | 4 | 132 | 3,8 | 4,2 | 5,5 | 6,4 | ++++ | 6,0 | 1,3 | 1,3 | <1 |
| | 5 | 105 | 3 | 5 | 5 | 6 | ++++ | 21,2 | nicht bestimmt | 3,5 | 3,0 |

Schältest:  ++++  Bei allen Siegeltemperaturen wird Folie von der Menüschale "gepeelt", ohne dass dabei die Folie ein-
oder weiterreißt. Einwandfreies, sattes, sauberes Peelen der Folie von Menüschale, auch im oberen
Temperaturbereich bei hoher Siegelnahtfestigkeit.

 -  Bei allen Siegeltemperaturen reißt Folie beim Abziehen von der Menüschale ein.

EP 1 900 775 B1

**Tabelle 5**

| | Mindestsiegel-temperatur | Siegelnahtfestigkeit APET/CPET-Menüschalen | | | | Schältest (= Peelverhalten) | Kontaktwinkel gegenüber Wasser | Globalmigration (Olivenöl) | Antimonmigration (3%ige Essigsäure) | Sensorische Eigenschaften | |
|---|---|---|---|---|---|---|---|---|---|---|---|
| | °C | 140°C | 160°C | 180°C | 200°C | | | mg/dm² | µg/dm² | Wasser Noten | Bratfett Noten |
| | | | | N/15mm | | | | | | | |
| Beispiel 4 | 133 | 3,6 | 4,1 | 5,3 | 6,2 | ++++ | 34° | 6,1 | <0,2 | 1,2 | <1 |
| Beispiel 5 | 129 | 4,2 | 4,7 | 5,8 | 6,4 | ++++ | 34° | 5,8 | <0,2 | 1,3 | <1 |
| Beispiel 6 | 129 | 4,2 | 4,7 | 5,8 | 6,4 | ++++ | 34° | 6,7 | <0,2 | 1,3 | <1 |

Schältest: ++++ Bei allen Siegeltemperaturen wird Folie von der Menüschale "gepeelt", ohne dass dabei die Folie ein- oder weiterreißt. Einwandfreies, sattes, sauberes Peelen der Folie von Menüschale, auch im oberen Temperaturbereich bei hoher Siegelnahtfestigkeit.

- Bei allen Siegeltemperaturen reißt Folie beim Abziehen von der Menüschale ein.

EP 1 900 775 B1

**Patentansprüche**

1. Biaxial orientierte Polyesterfolie, welche eine Basisschicht (B) und eine auf dieser Schicht (B) befindliche heißsiegelbare und gegenüber amorphem und kristallinem Polyester peelfähige Deckschicht (A) aufweist, wobei

   a) die Deckschicht (A) Polyester enthält, der aromatische und aliphatische Dicarbonsäureeinheiten aufweist, und
   b) die Schichten (A) und (B) titankatalysierten Polyester mit einer Titankonzentration von 1 bis 150 ppm enthalten.

2. Polyesterfolie nach Anspruch 1, **dadurch gekennzeichnet, dass** die Basisschicht (B) eine Dicke von mindestens 2 $\mu$m aufweist.

3. Polyesterfolie nach Anspruch 1 oder 2, **dadurch gekennzeichnet, dass** die Folie als Polyester ausschließlich titankatalysierten Polyester enthält.

4. Polyesterfolie nach einem oder mehreren der Ansprüche 1 bis 3, **dadurch gekennzeichnet, dass** der Polyester der Deckschicht (A) zu 25 bis 95 Mol-% aus aromatischen Dicarbonsäureeinheiten und zu 5 bis 75 Mol-% aus aliphatischen Dicarbonsäureeinheiten aufgebaut ist.

5. Polyesterfolie nach einem oder mehreren der Ansprüche 1 bis 4, **dadurch gekennzeichnet, dass** die aromatischen Dicarbonsäureeinheiten des Polyesters der Deckschicht (A) Terephthalsäure-, Isophthalsäure- oder 2,6-Naphthalindicarbonsäure-Einheiten sind.

6. Polyesterfolie nach einem oder mehreren der Ansprüche 1 bis 5, **dadurch gekennzeichnet, dass** die aliphatischen Dicarbonsäureeinheiten des Polyesters der Deckschicht (A) Pimelinsäure-, Korksäure-, Azelainsäure-, Sebazinsäure-, Glutarsäure- oder Adipinsäure-Einheiten sind.

7. Polyesterfolie nach einem oder mehreren der Ansprüche 1 bis 6, **dadurch gekennzeichnet, dass** die Deckschicht (A) Polyester enthält, der Azelainsäure-, Terephthalsäure-, Isophthalsäure- und Ethylenglykol-Einheiten aufweist.

8. Polyesterfolie nach einem oder mehreren der Ansprüche 1 bis 7, **dadurch gekennzeichnet, dass** die Deckschicht (A) Polyester enthält, der Ethylenterephthalat- und Ethylenisophthalat-Einheiten aufweist.

9. Polyesterfolie nach einem oder mehreren der Ansprüche 1 bis 8, **dadurch gekennzeichnet, dass** die Deckschicht (A) anorganische oder organische Partikel mit einem mittleren Partikeldurchmesser $d_{50}$ von 2,5 bis 8 $\mu$m enthält.

10. Polyesterfolie nach einem oder mehreren der Ansprüche 1 bis 9, **dadurch gekennzeichnet, dass** die Deckschicht (A) anorganische oder organische Partikel in einer Konzentration von 0,5 bis 10 Gew.-% enthält.

11. Polyesterfolie nach einem oder mehreren der Ansprüche 1 bis 10, **dadurch gekennzeichnet, dass** die Deckschicht (A) als Partikel synthetisches $SiO_2$ enthält.

12. Polyesterfolie nach einem oder mehreren der Ansprüche 1 bis 11, **dadurch gekennzeichnet, dass** die Folie einen ABC-Schichtaufbau hat, wobei (C) eine nichtsiegelfähige Deckschicht darstellt.

13. Polyesterfolie nach einem oder mehreren der Ansprüche 1 bis 12, **dadurch gekennzeichnet, dass** die Basisschicht (B) Polyethylenterephthalat enthält.

14. Polyesterfolie nach einem oder mehreren der Ansprüche 1 bis 13, **dadurch gekennzeichnet, dass** die Folie als Polymere ausschließlich titankatalysierte Polyester enthält.

15. Polyesterfolie nach einem oder mehreren der Ansprüche 1 bis 14, **dadurch gekennzeichnet, dass** die Deckschicht (A) mit einer Antifog-Beschichtung versehen ist.

16. Polyesterfolie nach einem oder mehreren der Ansprüche 1 bis 15, **dadurch gekennzeichnet, dass** die Antifog-Beschichtung auf der Deckschicht (A) das Trocknungsprodukt einer Beschichtungszusammensetzung ist, die Wasser, Polyvinylpyrrolidon, ein Tensid und optional ein haftvermittelndes Polymer enthält.

17. Polyesterfolie nach einem oder mehreren der Ansprüche 1 bis 16, **dadurch gekennzeichnet, dass** das Tensid der Beschichtungszusammensetzung ein Sulfobernsteinsäureester oder dessen Salz und das haftvermittelnde Polymer ein Acrylat ist.

18. Polyesterfolie nach einem oder mehreren der Ansprüche 1 bis 17, **dadurch gekennzeichnet dass** die Deckschicht (A) gegenüber amorphem und kristallinem Polyester eine Mindestsiegeltemperatur von 150 °C und eine maximale Siegeltemperatur von 220 °C aufweist.

19. Polyesterfolie nach einem oder mehreren der Ansprüche 1 bis 18, **dadurch gekennzeichnet, dass** die Deckschicht (A) bei einer Siegeltemperatur von 180 °C eine Siegelnahtfestigkeit gegenüber amorphem und kristallinem Polyester von mindestens 2 N/15 mm aufweist.

20. Polyesterfolie nach einem oder mehreren der Ansprüche 1 bis 19, **dadurch gekennzeichnet, dass** die Antifog-Beschichtung eine Dicke von 5 bis 500 nm aufweist.

21. Verfahren zur Herstellung einer Polyesterfolie nach einem oder mehreren der Ansprüche 1 bis 20, umfassend die Schritte:

   a) Herstellen einer mehrschichtigen Folie durch Coextrusion,
   b) Strecken der Folie in Längs- und Querrichtung,
   c) Thermofixieren der gestreckten Folie und
   d) Beschichten der Folie mit einer Antifog-Beschichtung vor der Längs- oder nach der Längs- und vor der Querstreckung.

22. Verwendung einer Polyesterfolie nach einem oder mehreren der Ansprüche 1 bis 20 als Verpackungsmaterial für Nahrungs- und Genussmittel.

23. Verwendung einer Polyesterfolie nach Anspruch 22 als Deckelfolie für Lebensmittelbehältnisse.

**Claims**

1. A biaxially oriented polyester film which has a base layer (B) and, located on this layer (B), a heat-sealable outer layer (A) peelable with respect to amorphous and crystalline polyester, where

   a) the outer layer (A) comprises polyester which has aromatic and aliphatic dicarboxylic acid units, and
   b) the layers (A) and (B) comprise titanium-catalyzed polyester with titanium concentration of from 1 to 150 ppm.

2. The polyester film as claimed in claim 1, wherein the thickness of the base layer (B) is at least 2 $\mu$m.

3. The polyester film as claimed in claim 1 or 2, which comprises, as polyester, exclusively titanium-catalyzed polyester.

4. The polyester film as claimed in one or more of claims 1 to 3, wherein the polyester of the outer layer (A) is composed of from 25 to 95 mol% of aromatic dicarboxylic acid units and from 5 to 75 mol% of aliphatic dicarboxylic acid units.

5. The polyester film as claimed in one or more of claims 1 to 4, wherein the aromatic dicarboxylic acid units of the polyester of the outer layer (A) are terephthalic acid units, isophthalic acid units, or2,6-naphthalenedicarboxylic acid units.

6. The polyester film as claimed in one or more of claims 1 to 5, wherein the aliphatic dicarboxylic acid units of the polyester of the outer layer (A) are pimelic acid units, suberic acid units, azelaic acid units, sebacic acid units, glutaric acid units, or adipic acid units.

7. The polyester film as claimed in one or more of claims 1 to 6, wherein the outer layer (A) comprises polyester which has azelaic acid units, terephthalic acid units, isophthalic acid units, and ethylene glycol units.

8. The polyester film as claimed in one or more of claims 1 to 7, wherein the outer layer (A) comprises polyester which has ethylene terephthalate units and ethylene isophthalate units.

9. The polyester film as claimed in one or more of claims 1 to 8, wherein the outer layer (A) comprises inorganic or organic particles with median particle diameter $d_{50}$ of from 2.5 to 8 $\mu$m.

10. The polyester film as claimed in one or more of claims 1 to 9, wherein the outer layer (A) comprises a concentration of from 0.5 to 10 % by weight of inorganic or organic particles.

11. The polyester film as claimed in one or more of claims 1 to 10, wherein the outer layer (A) comprises, as particles, synthetic $SiO_2$.

12. The polyester film as claimed in one or more of claims 1 to 11, which has ABC layer structure, where (C) represents a non-sealable outer layer.

13. The polyester film as claimed in one or more of claims 1 to 12, wherein the base layer (D) comprises polyethylene terephthalate.

14. The polyester film as claimed in one or more of claims 1 to 13, which comprises, as polymers, exclusively titanium-catalyzed polyesters.

15. The polyester film as claimed in one or more of claims 1 to 14, wherein the outer layer (A) has been provided with an antifog coating.

16. The polyester film as claimed in one or more of claims 1 to 15, wherein the antifog coating on the outer layer (A) is the product of drying of a coating composition which comprises water, polyvinylpyrrolidone, a surfactant, and optionally an adhesion-promoting polymer.

17. The polyester film as claimed in one or more of claims 1 to 16, wherein the surfactant of the coating composition is a sulfosuccinic ester or its salt and the adhesion-promoting polymer is an acrylate.

18. The polyester film as claimed in one or more of claims 1 to 17, wherein the outer layer (A) has, with respect to amorphous and crystalline polyester, a minimum sealing temperature of 150°C and a maximum sealing temperature of 220°C.

19. The polyester film as claimed in one or more of claims 1 to 18, wherein the outer layer (A) has, at a sealing temperature of 180°C, a seal seam strength of at least 2 N/15 mm with respect to amorphous and crystalline polyester.

20. The polyester film as claimed in one or more of claims 1 to 19, wherein the thickness of the antifog coating is from 5 to 500 nm.

21. A process for production of a polyester film as claimed in one or more of claims 1 to 20, encompassing the steps of:

    a) production of a multilayer film via coextrusion,
    b) longitudinal and transverse stretching of the film,
    c) heat-setting of the stretched film, and
    d) coating of the film with an antifog coating prior to longitudinal stretching or after longitudinal stretching and prior to transverse stretching.

22. The use of a polyester film as claimed in one or more of claims 1 to 20 as packaging material for foods and other consumable items.

23. The use of a polyester film as claimed in claim 22 as lid film for food- or drink-containers.

**Revendications**

1. Feuille de polyester biaxialement orientée, présentant une couche de base (B) et une couche de recouvrement (A) se trouvant sur cette couche (B), thermoscellable et pelable par rapport au polyester amorphe et au polyester cristallin, dans laquelle :

a) la couche de recouvrement (A) contient du polyester qui présente des unités acide dicarboxylique aromatiques et aliphatiques, et

b) les couches (A) et (B) contiennent du polyester catalysé par du titane en concentration en titane de 1 à 150 ppm.

**2.** Feuille de polyester selon la revendication 1, **caractérisée en ce que** la couche de base (B) a une épaisseur d'au moins 2 $\mu$m.

**3.** Feuille de polyester selon la revendication 1 ou 2, **caractérisée en ce que** la feuille contient, comme polyester, exclusivement du polyester catalysé par du titane.

**4.** Feuille de polyester selon l'une quelconque ou plusieurs des revendications 1 à 3, **caractérisée en ce que** le polyester de la couche de recouvrement (A) est constitué à hauteur de 25 à 95 % en mole d'unités acide dicarboxylique aromatiques et à hauteur de 5 à 75 % en mole d'unités acide dicarboxylique aliphatiques.

**5.** Feuille de polyester selon l'une quelconque ou plusieurs des revendications 1 à 4, **caractérisée en ce que** les unités acide dicarboxylique aromatiques du polyester de la couche de recouvrement (A) sont des unités acide téréphtalique, acide isophtalique ou acide 2,6-naphtalènedicarboxylique.

**6.** Feuille de polyester selon l'une quelconque ou plusieurs des revendications 1 à 5, **caractérisée en ce que** les unités acide dicarboxylique aliphatiques du polyester de la couche de recouvrement (A) sont des unités acide pimélique, acide subérique, acide azélaique, acide sébacique, acide glutarique ou acide adipique.

**7.** Feuille de polyester selon l'une quelconque ou plusieurs des revendications 1 à 6, **caractérisée en ce que** la couche de recouvrement (A) contient du polyester qui présente des unités acide azélaique, acide téréphtalique, acide isophtalique et éthylèneglycol.

**8.** Feuille de polyester selon l'une quelconque ou plusieurs des revendications 1 à 7, **caractérisée en ce que** la couche de recouvrement (A) contient du polyester qui présente des unités téréphtalate d'éthylène et isophtalate d'éthylène.

**9.** Feuille de polyester selon l'une quelconque ou plusieurs des revendications 1 à 8, **caractérisée en ce que** la couche de recouvrement (A) contient des particules inorganiques ou organiques ayant un diamètre particulaire moyen $d_{50}$ de 2,5 à 8 $\mu$m.

**10.** Feuille de polyester selon l'une quelconque ou plusieurs des revendications 1 à 9, **caractérisée en ce que** la couche de recouvrement (A) contient des particules inorganiques ou organiques en concentration de 0,5 à 10 % en poids.

**11.** Feuille de polyester selon l'une quelconque ou plusieurs des revendications 1 à 10, **caractérisée en ce que** la couche de recouvrement (A) contient comme particules du $SiO_2$ synthétique.

**12.** Feuille de polyester selon l'une quelconque ou plusieurs des revendications 1 à 11, **caractérisée en ce que** la feuille a une structure stratifiée de type ABC, (C) représentant une couche de recouvrement non scellable.

**13.** Feuille de polyester selon l'une quelconque ou plusieurs des revendications 1 à 12, **caractérisée en ce que** la couche de base (B) contient du poly(téréphtalate d'éthylène).

**14.** Feuille de polyester selon l'une quelconque ou plusieurs des revendications 1 à 13, **caractérisée en ce que** la feuille contient comme polymères exclusivement du polyester catalysé au titane.

**15.** Feuille de polyester selon l'une quelconque ou plusieurs des revendications 1 à 14, **caractérisée en ce que** la couche de recouvrement (A) est dotée d'un revêtement anti-buée.

**16.** Feuille de polyester selon l'une quelconque ou plusieurs des revendications 1 à 15, **caractérisée en ce que** le revêtement anti-buée sur la couche de recouvrement (A) est le produit de séchage d'une composition de revêtement qui contient de l'eau, de la polyvinylpyrrolidone, un agent tensioactif et éventuellement un polymère adhésif.

**17.** Feuille de polyester selon l'une quelconque ou plusieurs des revendications 1 à 16, **caractérisée en ce que** l'agent tensioactif de la composition de revêtement est un ester d'acide sulfosuccinique ou son sel et le polymère adhésif est un acrylate.

**18.** Feuille de polyester selon l'une quelconque ou plusieurs des revendications 1 à 17, **caractérisée en ce que** la couche de recouvrement (A) présente, vis-à-vis d'un polyester amorphe et d'un polyester cristallin, une température de scellage minimale de 150 °C et une température de scellage maximale de 220 °C.

**19.** Feuille de polyester selon l'une quelconque ou plusieurs des revendications 1 à 18, **caractérisée en ce que** la couche de recouvrement (A) à une température de scellage de 180 °C présente une résistance du cordon de scellage vis-à-vis du polyester amorphe et du polyester cristallin d'au moins 2 N/15 mm.

**20.** Feuille de polyester selon l'une quelconque ou plusieurs des revendications 1 à 19, **caractérisée en ce que** le revêtement anti-buée présente une épaisseur de 5 à 500 nm.

**21.** Procédé de fabrication d'une feuille de polyester selon l'une quelconque ou plusieurs des revendications 1 à 20, comprenant les étapes consistant à :

a) fabriquer une feuille à plusieurs couches par coextrusion,
b) effectuer un étirage de la feuille dans les directions longitudinale et transversale,
c) procéder à une thermofixation de la feuille étirée, et
d) revêtir la feuille d'un revêtement anti-buée avant l'étirage longitudinal ou après l'étirage longitudinal et avant l'étirage transversal.

**22.** Utilisation d'une feuille de polyester selon l'une quelconque ou plusieurs des revendications 1 à 20 comme matériau d'emballage pour des produits d'alimentation et de luxe.

**23.** Utilisation d'une feuille de polyester selon la revendication 22 comme film de couvercle pour des récipients de produits alimentaires.

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9619333 A
- EP 1471096 A
- EP 1471097 A
- EP 1475228 A
- EP 1475229 A
- EP 1471094 A
- EP 1471098 A
- EP 1375572 A
- US 4467073 A
- US 5262475 A
- WO 9413476 A
- EP 0144878 A
- US 4252885 A
- EP 0296620 A